(19) **Europäisches Patentamt / European Patent Office / Office européen des brevets**

(11) **EP 1 014 078 B1**

(12) **FASCICULE DE BREVET EUROPEEN**

(45) Date de publication et mention
de la délivrance du brevet:
**11.07.2012   Bulletin 2012/28**

(51) Int Cl.:
*G01N 23/04* *(2006.01)*     *G01N 23/201* *(2006.01)*

(21) Numéro de dépôt: **99403163.1**

(22) Date de dépôt: **16.12.1999**

(54) **Contrôle par radiographie d'un objet possédant un réseau cristallin**

Röntgenuntersuchung eines Objektes mit einem Kristallgitter

Radiographic testing of an object having a cristal lattice

(84) Etats contractants désignés:
**CH DE FR GB IT LI SE**

(30) Priorité: **17.12.1998   FR 9815914**

(43) Date de publication de la demande:
**28.06.2000   Bulletin 2000/26**

(73) Titulaire: **SOCIETE NATIONALE D'ETUDE ET DE CONSTRUCTION DE MOTEURS D'AVIATION "SNECMA"**
**75015 Paris (FR)**

(72) Inventeur: **Cossard, Serge Georges Guy**
**95100 Argenteuil (FR)**

(74) Mandataire: **Ilgart, Jean-Christophe et al**
**BREVALEX**
**95 rue d'Amsterdam**
**75378 Paris Cedex 8 (FR)**

(56) Documents cités:
**WO-A-96/17240     DE-A- 2 452 166**
**US-A- 4 433 427     US-A- 4 651 002**

• **RUDIN S: "ROTATING APERTURE WHEEL (RAW) DEVICE FOR IMPROVING RADIOGRAPHIC CONTRAST" OPTICAL ENGINEERING, vol. 19, no. 1, 1 février 1980 (1980-02-01), pages 132-138, XP000567947 ISSN: 0091-3286**

**EP 1 014 078 B1**

**Description**

**Domaine technique**

La présente invention concerne le contrôle par radiographie d'un objet possédant un réseau cristallin.

**Etat de la technique antérieure**

Les essais non destructifs (encore appelés contrôles non destructifs) permettent de fournir des informations sur l'état d'une pièce ou d'une structure sans qu'il en résulte des altérations préjudiciables à leur utilisation ultérieure. On peut ainsi déceler des défauts internes qui ne peuvent être révélés lors d'un examen superficiel. Les défauts internes d'une pièce peuvent être très variables : défauts de formes, de dimensions, présence d'inclusions, de fissures, etc.

Le principe de la détection d'un défaut, selon les essais non destructifs, consiste à exciter le défaut et à recueillir sa réponse. On peut ainsi soumettre la pièce à contrôler à un flux de rayonnements ionisants et, par étude du flux transmis, détecter un éventuel défaut grâce à la perturbation de flux que celui-ci introduit.

En soumettant la pièce à contrôler à un rayonnement électromagnétique de très courte longueur d'onde (rayons X ou γ), on peut recueillir les modulations d'intensité du faisceau transmis sous la forme d'une image sur un récepteur approprié (par exemple un film). La radiographie (X ou γ) utilise un détecteur temps réel qui est un élément ou un ensemble d'éléments transformant des photons (X ou y) en un signal électrique qui délivre en sortie soit un signal analogique, soit des données numériques. A côté de ces procédés de radiographie X et γ, on trouve également la neutrographie qui utilise un rayonnement de neutrons.

Selon le procédé de radioscopie (X ou y) l'image radiographie est captée, par un écran fluorescent par exemple, et conduit à une image optique observable directement et en temps réel.

Contrairement à une simple radiographie, la tomographie permet de donner des informations sur la morphologie complète d'un défaut grâce à plusieurs clichés pris sous des angles différents.

Le champ d'application de la radiographie industrielle est très vaste et concerne des pièces de toutes nature.

Cependant, lors de la réalisation d'un cliché dans des conditions classiques de radiographie ou de radioscopie, si la pièce inspectée possède un réseau cristallin, ce réseau cristallin irradié émet des radiations de même longueur d'onde que le rayonnement électromagnétique qui le traverse. Ce rayonnement secondaire provoque de la diffraction suivant la formule de Bragg. Cette diffraction engendre des rayonnements parasites, créant une confusion entre les défauts présents dans la pièce et les indications parasites. Ces rayonnements parasites peuvent également masquer les indications recherchées.

La demande de brevet WO-A-98/03115 divulgue un système d'examen du sein par tomosynthèse.

**Exposé de l'invention**

L'invention a été conçue pour remédier à l'inconvénient mentionné ci-dessus en atténuant l'influence de cette diffraction.

L'invention a donc pour objet un procédé de contrôle d'un objet par radiographie, tel que défini dans la revendication 1.

Si l'image radiographique est une radioscopie, le déplacement relatif de l'objet peut provenir soit d'un déplacement de la direction du rayonnement électromagnétique, soit d'un déplacement dudit objet. Dans ce cas, l'image composée peut être une image moyennée résultant de la moyenne de plusieurs images obtenues respectivement à la suite de plusieurs déplacements élémentaires constituant ledit déplacement relatif.

Si l'image radiographique est un cliché unique sur film, le déplacement relatif de l'objet peut provenir soit d'un changement de direction du rayonnement électromagnétique, soit d'un déplacement du film.

Si l'image radiographique est obtenue par tomographie et son acquisition effectuée par une lecture ligne par ligne, l'image composée peut être constituée de lignes impaires correspondant à un premier déplacement élémentaire et de lignes paires correspondant à un deuxième déplacement élémentaire.

De manière avantageuse, le premier déplacement élémentaire correspond à un déplacement de l'objet d'un premier angle déterminé par rapport à la direction du rayonnement électromagnétique et le deuxième déplacement élémentaire correspond à un déplacement de l'objet d'un deuxième angle déterminé par rapport à la direction du rayonnement électromagnétique, de même amplitude que le premier angle déterminé mais de signe inverse.

L'invention a aussi pour objet un dispositif de contrôle d'un objet par radiographie, tel que défini dans la revendication 7.

Si le dispositif fonctionne en radioscopie, les moyens provoquant le déplacement relatif de l'objet peuvent être des moyens de déplacement de la direction du rayonnement électromagnétique ou peuvent être constitués par les moyens de support de l'objet. Les moyens récepteurs peuvent alors être des moyens permettant de délivrer une image moyennée résultant de la moyenne de plusieurs images obtenues respectivement à la suite de plusieurs déplacements élémentaires constituant ledit déplacement relatif.

Si le dispositif fournit une image radiographique sous forme d'un cliché unique sur film, les moyens provoquant le déplacement relatif de l'objet peuvent être des moyens de changement de direction du rayonnement électromagnétique ou des moyens de déplacement du film.

Si le dispositif fonctionne en tomographie, l'acquisition de l'image radiographique étant effectuée par une lecture ligne par ligne, les moyens récepteurs peuvent comporter des moyens pour constituer ladite image composée à partir de lignes impaires correspondant à un premier déplacement élémentaire et de lignes paires correspondant à un deuxième déplacement élémentaire. Les moyens provoquant le déplacement relatif de l'objet peuvent être constitués par les moyens de support de l'objet qui assurent le premier déplacement élémentaire grâce à un déplacement de l'objet d'un premier angle déterminé par rapport à la direction du rayonnement électromagnétique, et qui assurent le deuxième déplacement élémentaire grâce à un déplacement de l'objet d'un deuxième angle déterminé par rapport à la direction du rayonnement électromagnétique, les premier et deuxième déplacements élémentaires étant de mêmes amplitudes mais de signes inverses.

**Brève description des dessins**

L'invention sera mieux comprise et d'autres avantages et particularités apparaîtront à la lecture de la description qui va suivre, donnée à titre d'exemple non limitatif, accompagnée des dessins annexés parmi lesquels :

- les figures 1 et 2 illustrent le principe mis en oeuvre dans la présente invention ;
- les figures 3 à 7 représentent cinq images radiographiques d'un objet possédant un réseau cristallin, prises après des déplacements relatifs de l'objet et destinées à former une image radiographique composée selon la présente invention, à chacune des cinq images radiographiques étant associée une coupe en luminance du signal radiographique recueilli ;
- la figure 8 représente l'image radiographique moyennée obtenue à partir des images radiographiques représentées aux figures 3 à 7, à cette image moyennée étant associée une coupe en luminance de son signal radiographique ;
- la figure 9 est un schéma d'un dispositif de radioscopie télévisée selon la présente invention.

**Description détaillée de modes de réalisation de l'invention**

Afin de réduire l'influence des rayonnements gênants, on provoque, comme il a été dit plus haut, un déplacement relatif de l'objet inspecté par rapport au rayonnement électromagnétique ou par rapport à l'organe récepteur. Le déplacement relatif peut être un déplacement de l'objet lui-même, un déplacement de la source émettrice du rayonnement électromagnétique ou encore un déplacement de l'organe récepteur.

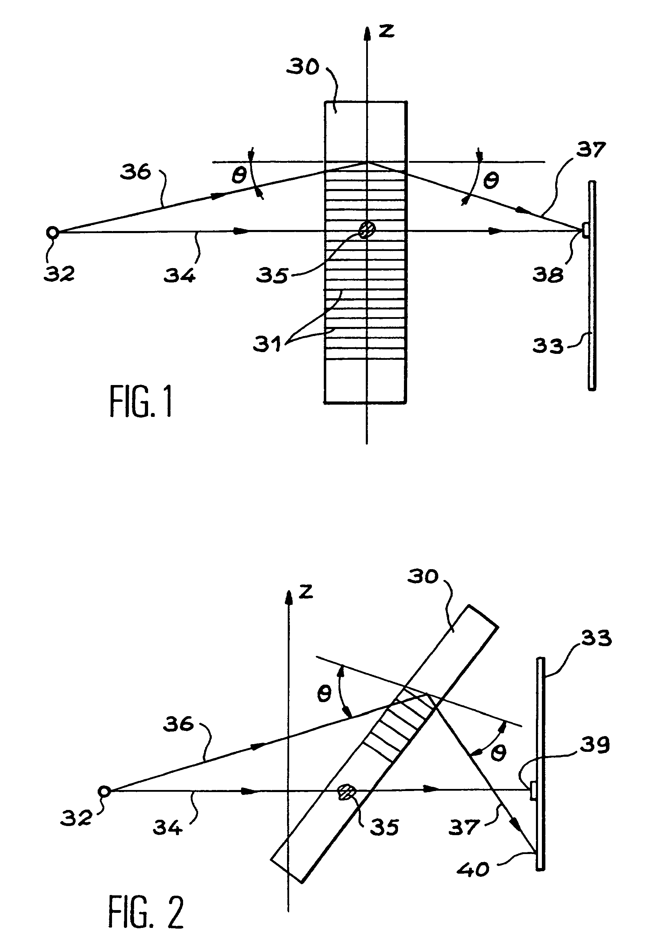

Les figures 1 et 2 illustrent le principe mis en oeuvre dans la présente invention. On a représenté de façon schématique un objet 30 possédant un réseau cristallin et dont les plans cristallins sont figurés sous la référence 31. La direction des plans cristallins 31 a été choisie perpendiculaire à un axe z confondu avec l'axe longitudinal de l'objet 30. L'objet 30 est soumis à un rayonnement électromagnétique fourni par une source appropriée 32. Après avoir traversé l'objet 30, le rayonnement électromagnétique atteint un détecteur dont le plan porte la référence 33. Deux rayons du rayonnement électromagnétique ont été représentés : le rayon 34 qui traverse l'objet 30 à l'endroit où celui-ci présente un défaut 35, et le rayon 36 qui parvient sur un plan cristallin selon l'angle de Bragg θ. En réponse au rayon 36, le réseau cristallin émet un rayon 37 dans des conditions correspondant à la formule de Bragg

$$2\ d\ \sin\theta = n\lambda$$

d     étant la distance entre les plans cristallins de l'objet,
λ     étant une longueur d'onde de rayonnement émis appartenant au spectre d'émission de la source 32,
n     étant un nombre entier égal ou supérieur à 1.

Les rayons 34 et 36 ont été choisis tels que le rayon 34 transmis et le rayon 37 diffracté forment sur le plan du détecteur 33 une image combinant l'image du défaut et la tache de diffraction.

Sur la figure 2, l'objet 30 a été incliné par rapport à l'axe z. Il en résulte une différenciation des images reçues sur le plan du détecteur 33. Un rayon transmis 34 traversant le défaut produit une image de ce défaut en 39 sur le plan du détecteur. Un rayon 36 atteignant l'objet 30 sous la condition de diffraction correspondant à la formule de Bragg conduit à un rayon diffracté 37 produisant une tache de diffraction 40 sur le plan du détecteur.

Les déplacements peuvent consister en mouvements simples ou combinés (linéaires ou angulaires) effectués lors de la prise d'images radiographiques, à l'aide d'un robot manipulateur ou d'un autre système mécanisé.

Les valeurs des déplacements dépendent de la nature du ou des matériaux constituant les objets, de l'épaisseur de l'objet à radiographier, de son type de solidification, des critères d'acceptation envisagés pour prononcer ou non la conformité de la fabrication des objets.

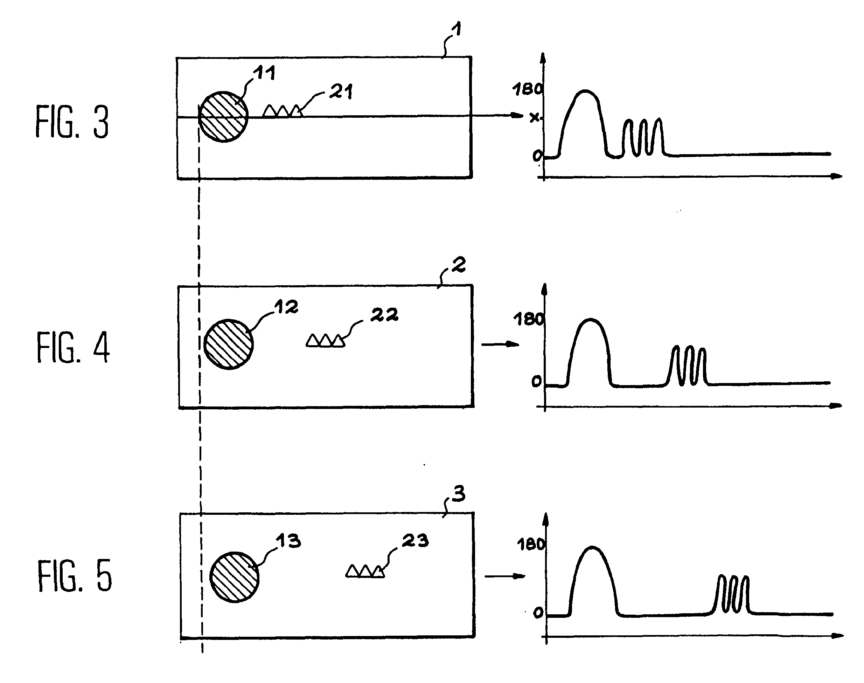

Dans le cas de la radioscopie au moyen de rayons X par exemple, on obtient l'image composée en effectuant une moyenne de n images primaires successives. Les figures 3 à 7 représentent chacune une image primaire obtenue après des déplacements successifs de l'objet. Les déplacements de l'objet sont minimes. Il en résultera une image composée pour laquelle un défaut présent dans un objet est décelable même si son image obtenue est très légèrement modifiée. Par contre, les déplacements mêmes minimes font que les éléments d'image parasites dus à la diffraction cristalline sont suffisamment déportés d'une image à l'autre pour que ces éléments ne s'additionnent pas. Dans ce cas, lors de l'obtention de l'image moyenne, les éléments d'image parasites ne seront pratiquement plus décelables.

La figure 3 représente une première image recueillie 1, dans laquelle un défaut est visible sous la référence 11 de même qu'un défaut parasite 21. Le graphe annexé représente la coupe en luminance du signal recueilli selon l'axe x.

La figure 4 représente une deuxième image recueillie 2 après un léger déplacement de l'objet. Le défaut de l'objet est visible en 12 et le défaut parasite en 22. On s'aperçoit que le défaut de l'objet est visible avec un très léger décalage par rapport à l'image 1, tandis que le défaut parasite visible en 22 ne peut être superposé sur le défaut parasite visible en 21. Ces décalages sont également représentés sur le graphe de luminance annexé.

La figure 5 représente une troisième image recueillie 3 après un autre déplacement de l'objet, de même amplitude que le déplacement précédent. Le défaut de l'objet est visible en 13 et le défaut parasite en 23.

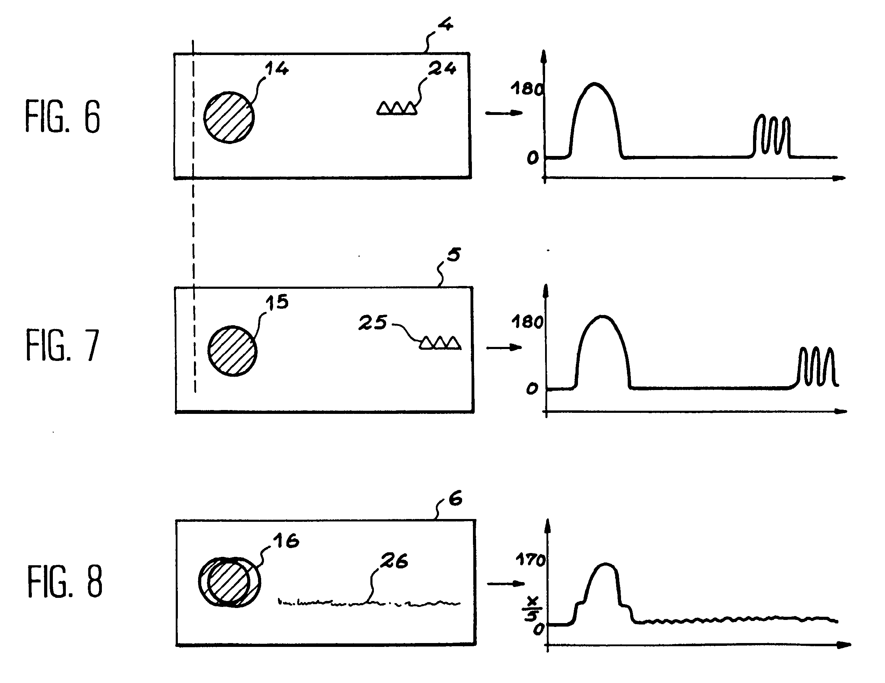

La figure 6 représente une quatrième image recueillie 4 après un autre déplacement de l'objet, de même amplitude que le déplacement précédent. Le défaut de l'objet est visible en 14 et le défaut parasite en 24.

La figure 7 représente une cinquième image recueillie 5 après un dernier déplacement de l'objet, de même amplitude que le déplacement précédent. Le défaut de l'objet est visible en 15 et le défaut parasite en 25.

Comme le montre la figure 8, l'image moyennée 6, présentée par radioscopie au contrôleur, est la somme des images primaires obtenues divisée par cinq. L'image définitive 16 du défaut est légèrement altérée tandis que le défaut parasite résultant 26 est très atténué par rapport au défaut parasite initial.

Dans le cas de la radiographie industrielle classique, l'image finale obtenue est réalisée à partir d'un cliché unique sur film. Les déplacements relatifs de l'objet peuvent être obtenus par déplacement du tube d'émission du rayonnement X ou par déplacement du film durant l'exposition.

Dans le cas de la tomographie, le système dit DR (de l'anglais "Digital Radiography") est comparable à une scopie télévisée où l'organe récepteur n'est plus surfacique mais linéaire, à ceci près que l'acquisition de l'image est effectuée par balayage, c'est-à-dire par une lecture ligne par ligne.

Dans ce cas, pour atténuer l'effet parasite dû à la diffraction cristalline, on peut utiliser le principe suivant :

-    un premier passage de n intégrations DR avec un pas impair (1, 3, 5, 7, etc.) et une rotation de l'objet d'un angle prédéterminé + $\alpha$.
-    un deuxième passage de n intégrations DR avec un pas pair (2, 4, 6, 8, etc.) et une rotation de l'objet d'un angle prédéterminé - $\alpha$.

L'image finale reconstituée par entrelaçage des lignes paires et impaires permet une forte atténuation du rayonnement parasite.

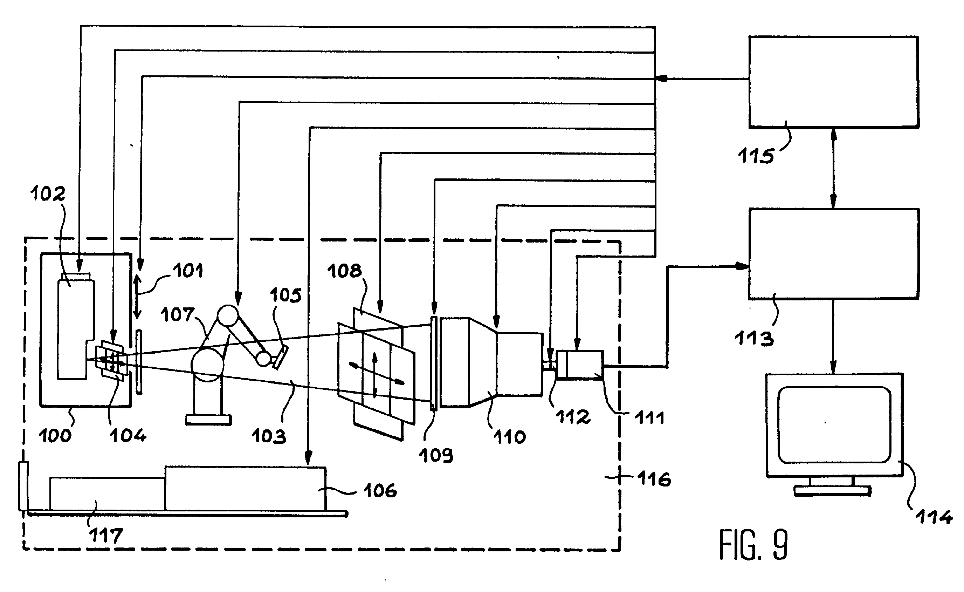

La figure 9 représente le schéma d'un dispositif de radioscopie télévisée mettant en oeuvre le principe de l'invention. Un caisson d'isolement 100 pourvu d'un obturateur 101 renferme une source de rayonnement X 102 qui émet un rayonnement 103 au travers d'un collimateur 104. L'objet 105 à contrôler, initialement déposé dans un bac 106, est saisi par un robot manipulateur 107 pour être soumis au rayonnement X 103. Le rayonnement X qui a traversé l'objet 105 passe dans un diaphragme à quatre volets 108 et dans un élément de post-filtration 109 pour atteindre un amplificateur de brillance 110. L'amplificateur de brillance 110 transmet le signal recueilli à une caméra 111 via un iris 112. La caméra 111 délivre un signal de sortie à une unité de traitement d'images 113 qui délivre une image composée à l'écran de contrôle 114 d'une part et qui communique avec une unité 115 chargée de piloter les différents organes du dispositif de radioscopie enfermés dans une cabine de protection 116. Une fois le contrôle effectué, les pièces contrôlées sont déposées dans un bac récepteur 117.

## Revendications

1.    Procédé de contrôle pour déceler un défaut interne (35) dans une pièce (105) soumise à un rayonnement électromagnétique (103) pour en obtenir une image radiographique sur des moyens récepteurs, ladite pièce (105) possédant un réseau cristallin susceptible d'émettre un rayonnement secondaire provoquant des rayonnements parasites par diffraction, ladite image radiographique (6), correspondant à un cliché, étant composée d'images primaires recueillies chacune dans des positions successives de ladite pièce (105) issues d'un déplacement relatif de ladite pièce (105), **caractérisé en ce que** ledit déplacement relatif est constitué d'au moins deux déplacements élémentaires successifs dont l'amplitude est prédéterminée de sorte que

- de premiers éléments d'image (11-15), correspondant audit défaut interne (35), ne subissent qu'un décalage minime entre chaque image primaire (1-5) de sorte que ledit défaut interne (35) reste visible (16) sur ladite image radiographique composée (6), tandis que
- de seconds éléments d'image parasites (21-25), correspondant aux dits rayonnements parasites dus à la diffraction cristalline, soient suffisamment déportés d'une image primaire à l'autre (1-5) de sorte que ces éléments d'image parasites (26) ne se superposent pas sur ladite image radiographique composée (6).

**2.** Procédé de contrôle selon la revendication 1, **caractérisé en ce que**, l'image radiographique étant une radioscopie, ledit déplacement relatif de la pièce provient soit d'un déplacement de la direction du rayonnement électromagnétique, soit d'un déplacement de ladite pièce.

**3.** Procédé de contrôle selon la revendication 2, **caractérisé en ce que** ladite image composée est une image moyennée résultant de la moyenne de plusieurs images obtenues respectivement à la suite de plusieurs déplacements élémentaires constituant ledit déplacement relatif.

**4.** Procédé de contrôle selon la revendication 1, **caractérisé en ce que**, l'image radiographique étant un cliché unique sur film, ledit déplacement relatif de la pièce provient soit d'un changement de direction du rayonnement électromagnétique, soit d'un déplacement du film.

**5.** Procédé de contrôle selon la revendication 1, **caractérisé en ce que**, l'image radiographique étant obtenue par tomographie et son acquisition étant effectuée par une lecture ligne par ligne, ladite image composée est constituée de lignes impaires correspondant à un premier déplacement élémentaire et de lignes paires correspondant à un deuxième déplacement élémentaire.

**6.** Procédé de contrôle selon la revendication 5, **caractérisé en ce que** le premier déplacement élémentaire correspond à un déplacement de la pièce d'un premier angle déterminé par rapport à la direction du rayonnement électromagnétique, et **en ce que** le deuxième déplacement élémentaire correspond à un déplacement de la pièce d'un deuxième angle déterminé par rapport à la direction du rayonnement électromagnétique, de même amplitude que le premier angle déterminé mais de signe inverse.

**7.** Dispositif de contrôle par radiographie pour déceler un défaut interne (35) dans une pièce (105), ladite pièce (105) possédant un réseau cristallin susceptible d'émettre un rayonnement secondaire provoquant des rayonnements parasites par diffraction, ledit dispositif comprenant des moyens (102) d'émission d'un rayonnement électromagnétique (103) apte à former une image radiographique, des moyens de support (107) de la pièce (105) permettant de soumettre ladite pièce audit rayonnement électromagnétique, des moyens récepteurs (111, 113, 114) de la réponse de la pièce audit rayonnement électromagnétique et fournissant une image radiographique (6) de ladite pièce, des moyens étant prévus pour provoquer un déplacement relatif de ladite pièce (105) dans des positions successives dans chacune desquelles est recueillie une image primaire, ladite image radiographique (6), correspondant à un cliché, étant composée de ces images primaires, **caractérisé en ce que** ledit déplacement relatif est constitué d'au moins deux déplacements élémentaires successifs dont l'amplitude est prédéterminée de sorte que

- de premiers éléments d'image (11-15), correspondant audit défaut interne (35), ne subissent qu'un décalage minime entre chaque image primaire (1-5) de sorte que ledit défaut interne (35) reste visible (16) sur ladite image radiographique composée (6), tandis que
- de seconds éléments d'image parasites (21-25), correspondant aux dits rayonnements parasites dus à la diffraction cristalline, soient suffisamment déportés d'une image primaire à l'autre (1-5) de sorte que ces éléments d'image parasites (26) ne se superposent pas sur ladite image radiographique composée (6).

**8.** Dispositif de contrôle selon la revendication 7, **caractérisé en ce que**, le dispositif fonctionnant en radioscopie, les moyens provoquant le déplacement relatif de ladite pièce sont des moyens de déplacement de la direction du rayonnement électromagnétique.

**9.** Dispositif de contrôle selon la revendication 7, **caractérisé en ce que**, le dispositif fonctionnant en radioscopie, les moyens provoquant le déplacement relatif de ladite pièce sont constitués par les moyens de support (107) de la pièce (105).

**10.** Dispositif de contrôle selon l'une des revendications 8 ou 9, **caractérisé en ce que** lesdits moyens récepteurs sont des moyens permettant de délivrer une image moyennée résultant de la moyenne de plusieurs images obtenues respectivement à la suite de plusieurs déplacements élémentaires constituant ledit déplacement relatif.

**11.** Dispositif de contrôle selon la revendication 7, **caractérisé en ce que**, le dispositif fournissant une image radiographique sous forme d'un cliché unique sur film, les moyens provoquant le déplacement relatif de ladite pièce sont des moyens de changement de direction de rayonnement électromagnétique.

**12.** Dispositif de contrôle selon la revendication 7, **caractérisé en ce que**, le dispositif fournissant une image radiographique sous forme d'un cliché unique sur film, les moyens provoquant le déplacement relatif de ladite pièce sont des moyens de déplacement dudit film.

**13.** Dispositif de contrôle selon la revendication 7, **caractérisé en ce que**, le dispositif fonctionnant en tomographie et l'acquisition de l'image radiographique étant effectuée par une lecture ligne par ligne, lesdits moyens récepteurs comportent des moyens pour constituer ladite image composée à partir de lignes impaires correspondant à un premier déplacement élémentaire et de lignes paires correspondant à un deuxième déplacement élémentaire.

14. Dispositif de contrôle selon la revendication 13, **caractérisé en ce que** les moyens provoquant le déplacement relatif de ladite pièce sont constitués par les moyens de support de la pièce qui assurent le premier déplacement élémentaire grâce à un déplacement de la pièce d'un premier angle déterminé par rapport à la direction du rayonnement électromagnétique, et qui assurent le deuxième déplacement élémentaire grâce à un déplacement de la pièce d'un deuxième angle déterminé par rapport à la direction du rayonnement électromagnétique, les premier et deuxième déplacements élémentaires étant de mêmes amplitudes mais de signes inverses.

**Claims**

1. A testing method to detect an internal defect (35) in a part (105) subject to electromagnetic radiation (103), in order to obtain a radiographic image of it in receiver means, said part (105) having a crystal lattice able to emit a secondary radiation causing parasite radiation by diffraction, said radiographic image (6), corresponding to an exposure being composed of primary images each taken in successive positions of said part (105) derived from a relative displacement of said part (105), <u>characterised in that</u> said relative displacement consists of at least two successive elementary displacements, the amplitude of which is predetermined such that

   - first image elements (11-15), corresponding to said internal defect (35), are subject only to a minimum shift between each primary image (1-5), such that said internal defect (35) remains visible (16) on said composed radiographic image (6), whereas
   - second parasite image elements (21-25), corresponding to said parasite radiation due to crystalline diffraction, are sufficiently offset from one primary image to the other (1-5), such that these parasite image elements (26) are not superimposed on said composed radiographic image (6).

2. A testing method according to claim 1, **characterised in that**, the radiographic image being a radioscopy, said relative displacement of the part results either from a displacement of the direction of the electromagnetic radiation, or from a displacement of said part.

3. A testing method according to claim 2, **characterised in that** said composed image is an averaged image resulting from the average of several images obtained respectively hollowing several elementary displacements constituting said relative displacement.

4. A testing method according to claim 1, **characterised in that**, the radiographic image being a single exposure on film, said relative displacement of the part results either from a change of direction of the electromagnetic radiation, or from a displacement of the film.

5. A testing method according to claim 1, **characterised in that**, the radiographic image being obtained by tomography, and its acquisition being realized by line-by-line reading, said composed image consists of uneven lines corresponding to a first elementary displacement, and of even lines corresponding to a second elementary displacement.

6. A testing method according to claim 5, **characterised in that** the first elementary displacement corresponds to a displacement of the part by a first angle determined relative to the direction of the electromagnetic radiation, and **in that** the second elementary displacement corresponds to a displacement of the part by a second angle determined relative to the direction of the electromagnetic radiation, of the same amplitude as the first determined angle, but having a reverse sign.

7. A device for testing by radiography to detect an internal defect (35) in a part (105), said part (105) having a crystalline network able to emit a secondary radiation causing parasite radiation by diffraction, said device including means (102) for emission of an electromagnetic radiation (103) able to form a radiographic image, support means (107) of the part (105) able to subject said part to said electromagnetic radiation, means (111, 113, 114) to receive the response of the part to said electromagnetic radiation, and providing a radiographic image (6) of said part, where means are provided to cause a relative displacement of said part (105) in successive positions, in each of which a primary image is received, said radiographic image (6), corresponding to an exposure, being composed of these primary images, <u>characterised in that</u> said relative displacement consists of at least two successive elementary displacements, the amplitude of which is predetermined such that

   - first image elements (11-15), corresponding to said internal defect (35), are subject only to a minimum shift between each primary image (1-5), such that said internal defect (35) remains visible (16) in said composed radiographic image (6), whereas

- second parasite image elements (21-25), corresponding to the parasite radiation due to the crystalline diffraction, are sufficiently offset from one primary image to the other (1-5), such that these parasite images (26) are not superimposed on said composed radiographic image (6).

8. A testing device according to claim 7, **characterised in that**, with the device operating using radioscopy, the means causing the relative displacement of said part are means of displacement of the direction of the electromagnetic radiation.

9. A testing device according to claim 7, **characterised in that**, with the device operating using radioscopy, the means causing the relative displacement of said part are constituted by the support means (107) of the part (105).

10. A testing device according to one of claims 8 or 9, **characterised in that** said receiver means are means enabling an averaged image resulting from the average of several images obtained respectively following several elementary displacements constituting said relative displacement to be delivered.

11. A testing device according to claim 7, **characterised in that**, with the device providing a radiographic image in the form of a single exposure on film, the means causing the relative displacement of said part are means for changing the direction of electromagnetic radiation.

12. A testing device according to claim 7, **characterised in that**, with the device providing a radiographic image in the form of a single exposure on film, the means causing the relative displacement of said part are means of displacement of said film.

13. A testing device according to claim 7, **characterised in that**, with the device operating using tomography and with the acquisition of the radiographic image being accomplished by a line-by-line reading, said receiver means include means to constitute said composed image from uneven lines corresponding to a first elementary displacement, and even lines corresponding to a second elementary displacement.

14. A testing device according to claim 13, **characterised in that** the means causing the relative displacement of said part is constituted by support means of the part which provide the first elementary displacement due to a displacement of the part by a first angle determined in relation to the direction of electromagnetic radiation, and which provides the second elementary displacement due to a displacement of the part by a second angle determined in relation to the direction of the electromagnetic radiation, the first and second elementary displacements being of the same amplitudes, but of reverse signs.

**Patentansprüche**

1. Prüfverfahren zum Auffinden eines inneren Fehlers (35) in einem Teil (105), das einer elektromagnetischen Strahlung (103) ausgesetzt wird, um von ihm ein Röntgenbild aufEmpfangsmitteln zu erhalten, wobei das Teil (105) ein Kristallgitter aufweist, das geeignet ist, eine Sekundärstrahlung auszusenden, die Beugungsstörstrahlungen bewirkt, wobei das Röntgenbild (6), das einem Negativ entspricht, aus Primärbildern zusammengesetzt ist, die jeweils in aufeinanderfolgenden Positionen des Teils (105), die sich aus einer Relativbewegung des Teils (105) ergeben, aufgenommen werden, **dadurch gekennzeichnet, dass** die Relativbewegung sich aus wenigstens zwei aufeinanderfolgenden Einzelbewegungen zusammensetzt, deren Amplitude vorbestimmt ist, so dass

   - erste Bildelemente (11-15), die dem inneren Fehler (35) entsprechen, lediglich einen minimalen Versatz zwischen jedem Primärbild (1-5) erfahren, so dass der innere Fehler (35) auf dem zusammengesetzten Röntgenbild (6) sichtbar bleibt, während
   - zweite Störbildelemente (21-25), die den auf die Kristallbeugung zurückzuführenden Störstrahlungen entsprechen, von einem Primärbild zum nächsten (1-5) ausreichend versetzt sind, so dass diese Störbildelemente (26) sich auf dem zusammengesetzten Röntgenbild (6) nicht überlagern.

2. Prüfverfahren nach Anspruch 1, **dadurch gekennzeichnet, dass** wenn das Röntgenbild eine Röntgenaufnahme ist, die Relativbewegung des Teils entweder aus einer Verschiebung der Richtung der elektromagnetischen Strahlung oder aus einer Bewegung des Teils hervorgeht.

3. Prüfverfahren nach Anspruch 2, **dadurch gekennzeichnet, dass** das zusammengesetzte Bild ein gemitteltes Bild ist, das sich aus dem Mittelwert mehrerer Bilder, die jeweils infolge von mehreren, die Relativbewegung bildenden Einzelbewegungen erhalten werden, ergibt.

4. Prüfverfahren nach Anspruch 1, **dadurch gekenn-**

zeichnet, dass wenn das Röntgenbild ein Einzelnegativ auf Film ist, die Relativbewegung des Teils entweder aus einer Richtungsänderung der elektromagnetischen Strahlung oder aus einer Bewegung des Films hervorgeht.

5. Prüfverfahren nach Anspruch 1, dadurch gekennzeichnet, dass wenn das Röntgenbild mittels Tomographie erhalten wird und seine Aufnahme durch ein zeilenweises Lesen erfolgt, das zusammengesetzte Bild aus ungeraden Zeilen, die einer ersten Einzelbewegung entsprechen, sowie aus geradzahligen Zeilen, die einer zweiten Einzelbewegung entsprechen, besteht.

6. Prüfverfahren nach Anspruch 5, dadurch gekennzeichnet, dass die erste Einzelbewegung einer Bewegung des Teils um einen bestimmten ersten Winkel gegenüber der Richtung der elektromagnetischen Strahlung entspricht und dass die zweite Einzelbewegung einer Bewegung des Teils um einen bestimmten zweiten Winkel gegenüber der Richtung der elektromagnetischen Strahlung, von gleicher Größe wie der bestimmte erste Winkel, aber mit umgekehrtem Vorzeichen, entspricht.

7. Röntgenprüfvorrichtung zum Auffinden eines inneren Fehlers (35) in einem Teil (105), wobei das Teil (105) ein Kristallgitter aufweist, das geeignet ist, eine Sekundärstrahlung auszusenden, die Beugungsstörstrahlungen bewirkt, wobei die Vorrichtung Mittel (102) zum Aussenden einer elektromagnetischen Strahlung (103), die geeignet ist, ein Röntgenbild zu bilden, Mittel zum Halten (107) des Teils (105), die ermöglichen, das Teil der elektromagnetischen Strahlung auszusetzen, Empfangsmittel (111, 113, 114) für die Reaktion des Teils auf die elektromagnetische Strahlung, die ein Röntgenbild (6) des Teils liefern, umfasst, wobei Mittel vorgesehen sind, um eine Relativbewegung des Teils (105) in aufeinanderfolgenden Positionen zu bewirken, in denen jeweils ein Primärbild aufgenommen wird, wobei das Röntgenbild (6), das einem Negativ entspricht, sich aus diesen Primärbildern zusammensetzt, dadurch gekennzeichnet, dass die Relativbewegung sich aus wenigstens zwei aufeinanderfolgenden Einzelbewegungen zusammensetzt, deren Amplitude vorbestimmt ist, so dass

- erste Bildelemente (11-15), die dem inneren Fehler (35) entsprechen, lediglich einen minimalen Versatz zwischen jedem Primärbild (1-5) erfahren, so dass der innere Fehler (35) auf dem zusammengesetzten Röntgenbild (6) sichtbar bleibt, während
- zweite Störbildelemente (21-25), die den auf die Kristallbeugung zurückzuführenden Störstrahlungen entsprechen, von einem Primärbild zum nächsten (1-5) ausreichend versetzt sind, so dass diese Störbildelemente (26) sich auf dem zusammengesetzten Röntgenbild (6) nicht überlagern.

8. Prüfvorrichtung nach Anspruch 7, dadurch gekennzeichnet, dass wenn die Vorrichtung radioskopisch arbeitet, die Mittel, welche die Relativbewegung des Teils bewirken, Mittel zum Verschieben der Richtung der elektromagnetischen Strahlung sind.

9. Prüfvorrichtung nach Anspruch 7, dadurch gekennzeichnet, dass wenn die Vorrichtung radioskopisch arbeitet, die Mittel, welche die Relativbewegung des Teils bewirken, von den Mitteln zum Halten (107) des Teils (105) gebildet sind.

10. Prüfvorrichtung nach einem der Ansprüche 8 oder 9, dadurch gekennzeichnet, dass die Empfangsmittel Mittel sind, die ermöglichen, ein gemitteltes Bild zu liefern, das sich aus dem Mittelwert mehrerer Bilder, die jeweils infolge von mehreren, die Relativbewegung bildenden Einzelbewegungen erhalten werden, ergibt.

11. Prüfvorrichtung nach Anspruch 7, dadurch gekennzeichnet, dass wenn die Vorrichtung ein Röntgenbild in Form eines Einzelnegativs auf Film liefert, die Mittel, welche die Relativbewegung des Teils bewirken, Mittel zur Änderung der Richtung der elektromagnetischen Strahlung sind.

12. Prüfvorrichtung nach Anspruch 7, dadurch gekennzeichnet, dass wenn die Vorrichtung ein Röntgenbild in Form eines Einzelnegativs auf Film liefert, die Mittel, welche die Relativbewegung des Teils bewirken, Mittel zum Bewegen des Films sind.

13. Prüfvorrichtung nach Anspruch 7, dadurch gekennzeichnet, dass wenn die Vorrichtung tomographisch arbeitet und die Aufnahme des Röntgenbildes durch ein zeilenweises Lesen erfolgt, die Empfangsmittel Mittel umfassen, um das zusammengesetzte Bild aus ungeraden Zeilen, die einer ersten Einzelbewegung entsprechen, sowie aus geradzahligen Zeilen, die einer zweiten Einzelbewegung entsprechen, zu bilden.

14. Prüfvorrichtung nach Anspruch 13, dadurch gekennzeichnet, dass die Mittel, welche die Relativbewegung des Teils bewirken, von den Mitteln zum Halten des Teils gebildet sind, die die erste Einzelbewegung durch ein Bewegen des Teils um einen bestimmten ersten Winkel gegenüber der Richtung der elektromagnetischen Strahlung sicherstellen und die die zweite Einzelbewegung durch ein Bewegen des Teils um einen bestimmten zweiten Winkel gegenüber der Richtung der elektromagnetischen Strahlung sicherstellen, wobei die erste und die zweite Einzelbewegung gleiche Amplituden, aber umgekehrte Vorzeichen aufweisen.

FIG. 1

FIG. 2

FIG. 3

FIG. 4

FIG. 5

FIG. 6

FIG. 7

FIG. 8

EP 1 014 078 B1

FIG. 9

EP 1 014 078 B1

**EP 1 014 078 B1**

**RÉFÉRENCES CITÉES DANS LA DESCRIPTION**

**Documents brevets cités dans la description**

- WO 9803115 A